(19) Europäisches Patentamt
European Patent Office
Office européen des brevets

(11) Veröffentlichungsnummer: **0 177 812**
**B1**

# (12) EUROPÄISCHE PATENTSCHRIFT

(45) Veröffentlichungstag der Patentschrift: **15.11.89**

(51) Int. Cl.⁴: **C 08 F 26/10**

(21) Anmeldenummer: **85111794.5**

(22) Anmeldetag: **18.09.85**

(54) **Verfahren zur Herstellung von unlöslichen, nur wenig quellbaren pulverförmigen Polymerisaten.**

(30) Priorität: **18.09.84 DE 3434138**

(43) Veröffentlichungstag der Anmeldung: **16.04.86 Patentblatt 86/16**

(45) Bekanntmachung des Hinweises auf die Patenterteilung: **15.11.89 Patentblatt 89/46**

(84) Benannte Vertragsstaaten: **CH DE FR GB IT LI NL**

(56) Entgegenhaltungen:
**EP-A-0 027 936**
**EP-A-0 088 964**

**HOUBEN-WEYL, Molekulare Stoffe Teil 1 (Band 14/1), Seite 98 (1961)**
**ULLMANNS ENCYKLOPAEDIE DER TECHNISCHEN CHEMIE, Band 19 (1980), Seiten 3 u. 385**

(73) Patentinhaber: **BASF Aktiengesellschaft, Carl-Bosch- Strasse 38, D-6700 Ludwigshafen (DE)**

(72) Erfinder: **Tschang, Chung- Ji, Dr., Hinterbergstrasse 31, D-6702 Bad Duerkheim (DE)**
Erfinder: **Messmer, Karlheinz, Dr., Auf Kies 6, D-6719 Weisenheim (DE)**
Erfinder: **Denzinger, Walter, Wormser Landstrasse 65, D-6720 Speyer (DE)**

EP 0 177 812 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Aus der DE-PS-2 255 263 ist ein Verfahren zur Herstellung von unlöslichen vernetzten nur wenig quellbaren Polymerisaten des N-Vinylpyrrolidons bekannt bei dem man N-Vinylpyrrolidon in wäßriger Lösung in Gegenwart von 0,5 bis 10 Gew.-%, bezogen auf N-Vinylpyrrolidon, eines cyclischen Säureamids, das mindestens zwei ethylenisch ungesättigte Gruppen enthält und von denen mindestens eine am Amidstickstoff gebunden ist, als Vernetzer polymerisiert. Die Polymerisationsreaktion wird dabei durch Erhitzen der Reaktionslösung auf mindestens 80° C gestartet und bei der Siedetemperatur des Wassers zu Ende geführt.

Die US-PS-3 277 066 betrifft ein Verfahren zur Herstellung von unlöslichen Polymerisaten von N-Vinyllactamen durch Erhitzen von N-Vinyllactamen in Gegenwart von Oxiden und Hydroxiden von Alkalimetallen oder Erdalkalimetallen als Katalysator und Wasser. Die Polymerisation wird bei höherer Temperatur gestartet, z. B. bei 140° C, und anschließend bei einer tieferen Temperatur (100° C) fortgeführt.

Gemäß der Lehre der DE-PS-2 437 640 wird N-Vinylpyrrolidon in verdünnter wäßriger Lösung in Gegenwart der gleichen Vernetzer unter Ausschluß von Sauerstoff und zusätzlich in Gegenwart von 0,05 bis 2 Gew.-%, bezogen auf N-Vinylpyrrolidon, mindestens einer α- oder β-Ketocarbonsäure oder deren Methyl- oder Ethylester polymerisiert. Bei den bekannten Verfahren ist es erforderlich, zumindest geringe Mengen an Basen mitzuverwenden. Es muß jedoch darauf geachtet werden, daß nicht in einem zu hohen pH-Bereich polymerisiert wird, weil sonst eine Vergilbung der Polymerisate eintritt.

Aus der US-PS-4 451 582 ist ein Verfahren zur Herstellung von unlöslichen, in Wasser nur wenigquellbaren, körnigen Polymerisaten aus basischen Vinylheterocyclen mit einem pKa-Wert von mehr als 4 und deren Copolymerisaten mit bis zu 30 Gew.-% copolymerisierbarer Monomerer bekannt, bei dem man die Monomeren in Gegenwart von 0,1 bis 10 Gew.-%, bezogen auf die Gesamtmonomermenge, eines Vernetzers unter Ausschluß von Sauerstoff und Polymerisationsinitiatoren polymerisiert. Die Polymerisate werden vorzugsweise durch Fällungspolymerisation in Wasser hergestellt. Sie können jedoch auch in Abwesenheit von Lösemitteln für die Monomeren durch Erhitzen der Monomeren auf Temperaturen von vorzugsweise 150 bis 180° C erhalten werden. Diese Reaktion ist allerdings schlecht kontrollierbar und ergibt nur geringe Raum-Zeit-Ausbeuten und relativ stark verunreinigte Produkte.

Es ist außerdem bekannt, unlösliche, nur wenig quellbare Polymerisate der Acrylsäure, sog. Popcornpolymerisate, durch Polymerisieren von Acrylsäure in wäßriger Lösung in Gegenwart von geringen Mengen an 2,2'-Azobisiso-butyronitril herzustellen, vgl. J.W. Breitenbach et. al., Makromol. Chemie 177, (1976), 2787 bis 2792. Dabei entstehen jedoch Polymermischungen, die als Hauptbestandteil ein glasiges Polymer (Gel) und in untergeordneten Mengen da Popcornpolymere der Acrylsäure enthalten. Die Trennung der Polymergemische ist in der Technik nicht mit vertretbarem Aufwand durchzuführen.

Die DE-OS-2 636 243 betrifft ein Verfahren zur Herstellung von pulverförmigen Polymerisaten, bei dem man wasserlösliche ethylenisch ungesättigte Verbindungen, die hydrophile Polymerisate bilden, in Gegenwart von Wasser als Wärmeübertragungsmittel in einem Pulverbett unter Aufrechterhaltung des Pulverzustands, Umwälzung der Reaktionsmasse und Verdampfen des Wassers aus der Polymerisationszone in Gegenwart von Polymerisationsinitiatoren zu wasserlöslichen bzw. wasserquellbaren Polymerisaten polymerisiert.

Aus der EP-Anmeldung 27 936 ist ein Verfahren zur Herstellung von pulverförmigen Polymerisaten aus polymerisierbaren monoethylenisch ungesättigten Verbindungen bekannt, bei dem man die Monomeren in einem Pulverbett in Gegenwart üblicher Polymerisationsinitiatoren unter Aufrechterhaltung des Pulverzustands und Umwälzung der Reaktionsmasse polymerisiert. Um die Polymerisationswärme abzuführen, verwendet man als Wärmeübertragungsmittel organische Lösemittel, die ein Fällungsmittel für die Polymerisate darstellen. Die organischen Lösemittel werden dampfförmig aus der Polymerisationszone entfernt. Man erhält wasserlösliche bzw. in Wasser quellbare Polymerisate.

Aus Houben-Weyl, Band 14, Makrom. Stoffe Teile 1, (1961), Seite 98 ist bekannt, daß aus Gemischen von Styrol mit Divinylbenzol Popkorn-Polymere gebildet werden. Derartige Polymerisate entstehen auch bei der technischen Butadien-Styrol-Polymerisation. Auch Acrylsäuremethylester neigt zur Bildung von Popkorn-Polymeren. Popkorn-Polymere haben die Eigenschaft, daß sie bei Kontakt mit den Monomeren, aus denen sie bestehen oder mit anderen Monomeren, diese in Popkornpolymerisate verwandeln können. Sie wirken sozusagen als Keim für die Polymerisation. Die Aktivität geht jedoch verloren, wenn sie mit Luft in Berührung kommen.

Aus Ullmanns Encyklopädie der Techn. Chemie, 4. Aufl. Band 19, 1980, Seite 385, ist bekannt, daß beim Erhitzen von V-Vinylpyrrolidon mit Hydroxiden und Alkoholaten der Alkali- und Erdalkali-Metalle in spontaner Reaktion ein unlösliches, in Wasser schwach quellbares Polymerisat gebildet wird. Solche als Popkorn-Polymerisate bezeichneten Stoffe entstehen auch beim Erhitzen von N-Vinylpyrrolidon mit Divinyl-Verbindungen unter Ausschluß von Sauerstoff. In Abwesenheit von Basen dauert es in der Regel mehrere Stunden, bevor die Popkorn-Polymerisation überhaupt beginnt.

Der Erfindung liegt die Aufgabe zugrunde, ein Verfahren zur Herstellung von unlöslichen, nur wenig quellbaren, pulverförmigen Polymerisaten auf Basis von monoethylenisch ungesättigten Carbonsäureamiden, Carbonsäuren und Carbonsäureestern zur Verfügung zu stellen, bei dem direkt pulverförmige Polymerisate in hoher Reinheit erhalten werden und bei dem die Raum-Zeit-Ausbeute höher ist als bei den bekannten Verfahren zur Herstellung von unlöslichen Polymerisaten.

Die Aufgabe wird erfindungsgemäß dadurch gelöst, daß man zum Starten der Polymerisation ein aktives Popcorn-Polymerisat verwendet, das durch Erhitzen einer Mischung aus

99,6 bis 98,8 Gew.-% N-Vinylpyrrolidon-2 und

0,4 bis 1,2 Gew.-% einer mindestens zwei ethylenisch ungesättigte Doppelbindungen aufweisenden Verbindung als Vernetzer

auf eine Temperatur in dem Bereich von 100 bis 150°C in Abwesenheit von Sauerstoff und Polymerisationsinitiatoren erhältlich ist und dann darin Mischungen aus

(a) 99,9 bis 90 Gew.-% einer Verbindung der Formel

$R\text{-}CO\text{-}NR^1\text{-}CH = CH_2$

in der R = H, $C_1$- bis $C_3$-Alkyl und $R^1$ = H oder $CH_3$ bedeutet, Acrylamid, Methacrylamid, Acrylsäure, Methacrylsäure, Acrylsäureester, Methacrylsäureester und/oder einem Vinylester

und

(b) 0,1 bis 10 Gew.-%, bezogen auf die gesamten Monomeren, einer mindestens zwei ethylenisch ungesättigte, nicht konjugierte Doppelbindungen aufweisenden Verbindung als Vernetzer

in einem Pulverbett in Gegenwart eines Wärmeübertragungsmittels, das gegenüber den Reaktionsteilnehmern inert ist, bei Temperaturen von 90 bis 220°C unter Aufrechterhaltung des Pulverzustandes, Umwälzung der Reaktionsmasse und Verdampfen des Wärmeübertragungsmittels aus der Polymerisationszone unter Ausschluß von Sauerstoff und Polymerisationsinitiatoren polymerisiert.

Im Gegensatz zu der sonst üblichen Herstellung von unlöslichen, nur wenig quellbaren, pulverförmigen Polymerisaten, den sogenannten Popcorn-Polymerisaten, erfolgt die Herstellung dieser Polymeren gemäß vorliegender Erfindung in einem Pulverbett. Der Pulverzustand des Reaktionsgemisches wird dabei während der gesamten Dauer der Polymerisation aufrechterhalten.

Geeignete Monomere zur Herstellung der unlöslichen, nur wenig quellbaren Polymerisaten sind Verbindungen der Formel

$$R\text{-}CO\text{-}NR^1\text{-}CH = CH_2 \quad (I)$$

in der R = H, $C_1$- bis $C_3$-Alkyl und $R^1$ = H oder $CH_3$ bedeutet.

Typische Vertreter dieser Verbindungsklasse sind N-Vinylformamid ($H\text{-}CO\text{-}NH\text{-}CH = CH_2$), N-Vinyl-N-Methyl-Formamid und N-Vinyl-N-Methylacetamid.

Unter diesen Verbindungen nimmt das N-Vinylformamid ($H\text{-}CO\text{-}NH\text{-}CH=CH_2$) eine Sonderstellung ein, weil es auch in Abwesenheit von Monomeren der Gruppe (b) zu unlöslichen, nur wenig quellbaren Polymerisaten polymerisiert werden kann. Es ist jedoch auch selbstverständlich möglich, unlösliche, nur wenig quellbare Polymerisate aus N-Vinylformamid und den Monomeren (b) herzustellen. Als weitere Monomere der Gruppe (a), die zur Herstellung von Popcorn-Polymerisaten mit den Monomeren (b) polymerisiert werden kann, eignen sich Acrylamid, Methacrylamid, Acrylsäure, Methacrylsäure, Acrylsäureester, Methacrylsäureester und/oder Vinylester. Die Acrylsäure- und Methacrylsäureester leiten sich vorzugsweise von gesättigten, einwertigen Alkoholen mit 1 bis 4 Kohlenstoffatomen bzw. gesättigten zweiwertigen 2 bis 4 Kohlenstoffatome enthaltenden Alkoholen ab. Beispiele für diese Ester sind im einzelnen Acrylsäuremethylester, Methacrylsäuremethylester, Acrylsäureethylester, Methacrylsäureethylester, Acrylsäure-n-Propylester, Methacrylsäure-n-Propylester, Acrylsäureisopropylester, Methacrylsäureisopropylester und die Ester der Acrylsäure- und Methacrylsäure, die sich von den isomeren Butanolen ableiten, sowie Hydroxyethylacrylat, Hydroxyethylmethacrylat, Hydroxypropylacrylat, Hydroxypropylmethacrylat, Hydroxybutylacrylat und Hydroxybutylmethacrylat. Von den Vinylestern kommen vor allem Vinylacetat und Vinylpropionat in Betracht.

Besonders geeignet zur Herstellung der Popcorn-Polymerisate sind N-Vinylformamid, N-Vinyl-N-Methyl-Formamid, N-Vinyl-N-Methylacetamid, Acrylamid, Methacrylamid, Acrylsäure und Methacrylsäure. Die Verbindungen der Gruppe (a) können entweder allein oder in Mischung miteinander mit den Monomeren der Gruppe (b) in einem Pulverbett polymerisiert werden. Geeignet sind beispielsweise Mischungen aus N-Vinylformamid und Acrylsäure,

N-Vinylformamid und Methacrylsäure,

N-Vinylformamid und Acrylamid

N-Vinylformamid und Methacrylamid,

N-Vinylformamid und einem Acrylsäure- oder Methacrylsäureester aus einem $C_1$- bis $C_4$-Alkohol,

Acrylamid und Acrylsäure,

Acrylamid und Methacrylsäure,

Methacrylsäure und Acrylsäure und

Acrylamid und Methacrylamid.

Es ist selbstverständlich auch möglich, mehr als zwei der genannten Monomeren der Gruppe (a) der Polymerisation im Pulverbett zu unterwerfen, z. B. Mischungen aus Acrylamid, Acrylsäure und Methacrylsäure, Mischungen aus Acrylamid, Methacrylsäure und einem Methacrylsäure- oder Acrylsäurehydroxyalkylester. Die Monomeren der Gruppe (a) können dabei in jedem beliebigen Verhältnis miteinander gemischt werden. Vorzugsweise polymerisiert man Monomerenmischungen der Komponente (a) aus 20 bis 100 Gew.-% Acrylamid und/oder Methacrylamid zusammen mit 80 bis 0 Gew.-% Acrylsäure und/oder Methacrylsäure. Die Verbindungen der Gruppe (a) sind zu 99,9 bis 90 Gew.-% am Aufbau der unlöslichen, nur wenig quellbaren Polymerisate beteiligt.

Als Monomer der Komponente (b) verwendet man eine mindestens zwei ethylenisch ungesättigte Doppelbindungen aufweisende Verbindung als Vernetzer. Die Doppelbindungen in den Vernetzern sind nicht konjugiert. Vorzugsweise handelt es sich bei den Vernetzern um Divinylethylenharnstoff, Ethyliden-bis-3-(N-vinylpyrrolidon), 1-Vinyl-3-ethylidenpyrrolidon, Acrylsäureallylester, Methacrylsäureallylester, Divinylpropylenharnstoff, Butandioldiacrylat, Methylen-N,N'-bis-acrylamid, Ethylen-N,N'-bis-acrylamid. Anstelle von Methylen-N,N'-bis-acrylamid kann man auch von Acrylamid und Formaldehyd ausgehen, weil sich der bifunktionelle Vernetzer zumindest unter den Polymerisationsbedingungen bildet. Ebenso kann selbstverständlich auch eine Mischung aus Methacrylamid und Formaldehyd als Vernetzer verwendet werden. Die Vernetzer sind, bezogen auf die gesamten bei der Polymerisation eingesetzten Monomeren, in einer Menge von 0,1 bis 10, vorzugsweise 0,4 bis 2 Gew.-% anwesend. Man kann entweder einen einzigen Vernetzer, z. B. Divinylethylenharnstoff oder Acrylsäureallylester bzw. Mischungen mehrer Vernetzer verwenden, z. B. Mischungen aus Divinylethylenharnstoff und Butandioldiacrylat bzw. Mischungen aus Divinylpropylenharnstoff und Methylen-N,N'-bis-acrylamid.

Vorzugsweise verwendet man bekannte Popcorn-Polymerisate aus N-Vinylpyrrolidon und einem Vernetzer als Ausgangsmaterial zum Starten der Polymerisation beim erfindungsgemäßen Verfahren. Die Herstellung des Ausgangsmaterials kann dabei in einer separaten Apparatur oder auch in der Apparatur vorgenommen werden, in der die Polymerisation anschließend im Pulverbett durchgeführt wird. Zur Herstellung eines polymerisationsfähigen Popcorn-Polymerisates, das bei Zugabe von geeigneten Monomerenmischungen die Polymerisation startet, kann man beispielsweise von einer Mischung aus 99,6 bis 98,8 Gew.-%. N-Vinylpyrrolidon-2 und 0,4 bis 1,2 Gew.-% einer mindestens 2-ethylenisch ungesättigte Doppelbindungen aufweisenden Verbindung als Vernetzer ausgehen. Hierfür verwendet man vorzugsweise frisch destilliertes N-Vinylpyrrolidon-2, weil N-Vinylpyrrolidon, das längere Zeit gelagert wurde, zu einer längeren Induktionsperiode Anlaß gibt. Die Polymerisation kann sowohl mit wasserhaltigem wie auch mit wasserfreiem N-Vinylpyrrolidon gestartet und fortgeführt werden. Es ist jedoch vorteilhaft, für die Initiierung der Polymerisation wasserfreies N-Vinylpyrrolidon zu verwenden, weil die Polymerisation in aller Regel bei Temperaturen oberhalb des Siedepunkts von Wasser gestartet wird. Im allgemeinen werden solche Popcorn-Polymerisate bei einer Temperatur von 100 bis 150°C in Abwesenheit von Sauerstoff und Polymerisationsinitiatoren hergestellt.

Als Vernetzer für die Herstellung eines aktiven Popcorn-Polymerisates verwendet man vorzugsweise Divinylethylenharnstoff, Ethyliden-bis-3(N-vinylpyrrolidon), 1-Vinyl-3-ethylidenpyrrolidon, Butandioldiacrylat, Methylen-N,N'-bis-acrylamid, Ethylen-N,N'-bis-acrylamid und/oder Divinylpropylenharnstoff. Die für die Herstellung des aktiven Popcorns verwendete Menge an Vernetzer liegt in der bevorzugten Ausführungsform unterhalb der Vernetzermengen, die bisher für die Herstellung von Popcorn-Polymerisaten des N-Vinylpyrrolidons eingesetzt wurden. Man kann jedoch auch größere Mengen an Vernetzer für die Herstellung des aktiven Popcorn-Polymerisates verwenden, jedoch ist dann mit einer längeren Induktionsund auch Polymerisationszeit zu rechnen. Die Induktionsperiode bei der Herstellung des aktiven Popcorn-Polymerisates beträgt etwa 10 bis 30 Minuten. Die oben beschriebenen Monomerenmischungen werden unter Rühren polymerisiert. Aus der Lösung bildet sich bei Abschluß der Polymerisation ein trockenes Pulver, das unter Ausschluß von Sauerstoff gelagert bzw. direkt als Vorlage für die Polymerisation im Pulverbett eingesetzt werden kann.

Die Polymerisation im Pulverbett wird dadurch gestartet, daß man eine Mischung aus 99,6 bis 98,8 Gew.-% N-Vinylpyrrolidon und 0,4 bis 1,2 Gew.-% einer mindestens zwei ethylenisch ungesättigte Doppelbindungen aufweisende Verbindung auf eine Temperatur in dem Bereich von 100 bis 150°C in Abwesenheit von Sauerstoff und Polymerisationsinitiatoren erhitzt. Dabei bildet sich ein polyermisationsfähiges Popcorn-Polymerisat, das bei Zugabe geeigneter Monomerenmischungen die Polymerisation dieser Monomeren ohne Induktionsperiode startet.

Zur erfindungsgemäßen Herstellung von Popcorn-Polymerisaten legt man in einer Polymerisationszone ein unlösliches, nur wenig qellbares Polymerisat vor oder stellt es darin her und polymerisiert dann die oben beschriebenen Monomerenmischungen aus (a) und (b) in Gegenwart eines Wärmeübertragungsmittels, das gegenüber den Reaktionsteilnehmer inert ist, bei Temperaturen von 90 bis 220°C unter Aufrechterhaltung des Pulverzustands, Umwälzung der Reaktionsmasse und Verdampfen des Wärmeübertragungsmittels aus der Polymerisationszone unter Ausschluß von Sauerstoff und Polymerisationsinitiatoren. Die Wärmeübertragungsmittel haben den Zweck, die bei der Polymerisation und die durch Umwälzung des Pulvers entstehende Wärme aus dem Reaktionssystem zu entfernen.

Als Wärmeübertragungsmittel kommen beispielsweise folgende bei Raumtemperatur flüssige Substanzen in Betracht: Wasser, Alkohole, Ketone, Ether, aromatische und aliphatische Kohlenwasserstoffe, halogenierte Kohlenwasserstoffe und Ester. Das Wärmeübertragungsmittel wird vorteilhafterweise in einer Menge eingesetzt, die ausreicht, um die unter den Reaktionsbedingungen entstehende Wärme aus der Polamerisationszone abzuführen. Die Menge an Wärmeübertragungsmittel ist somit abhängig von der Verdampfungswärme des jeweils verwendeten Wärmeübertragungsmittels, d.h. die bei der Polymerisation frei werdende Wärme muß etwa so groß sein, wie die Verdampfungsenthalpie des Wärmeübertragungsmittels. So benötigt man beispielsweise bei Verwendung von Wasser als Wärmeübertragungsmittel etwa 5 bis 25 %, bezogen auf die bei der Polymerisation eingesetzten Monomeren, während man bei Einsatz von organischen Lösungsmitteln als Wärmeüberträger etwa 15 bis 70 % Lösungsmittel, bezogen auf die Monomeren, benötigt. Feste Monomere, wie z. B. Acrylamid, müssen vor der erfindungsgemäßen Polymerisation in Lösung gebracht werden. Dabei ist es u.U. nötig, mehr Lösungsmittel, z. B. Wasser, einzusetzen, als mit Hilfe der Polymerisationsenthalpie verdampft werden kann. In diesen Fällen ist es sinnvoll, das überschüssige Lösemittel durch Wärmezufuhr in den Polymerisationsraum zum Verdampfen zu bringen. Einzelne Beispiele für Wärmeübertragungsmittel sind

Methanol, Ethanol, Isopropanol, n-Propanol, n-Butanol, Isobutanol, tert.-Butanol, Cyclohexanol, Aceton, Methylethylketon, Diethylketon, Cyclohexanon, Methyl-tert.-butylether, Pentan, Hexan, Cyclohexan, aliphatische $C_7$- bis $C_{10}$-Kohlenwasserstoffe, Toluol, Xylol, Essigsäurepropylester und Essigsäurebutylester.

Vorzugsweise verwendet man als Wärmeübertragungsmittel Wasser, einwertige $C_1$- bis $C_4$-Alkohole, Methylethylketon, Cyclohexanon, n-Propanol, Isopropanol und Essigsäurepropylester. Die Wärmeübertragungsmittel sind bei 20° C und unter Normaldruck flüssig und haben einen Siedepunkt in dem Bereich von etwa 40 bis 150° C.

Die Wärmeübertragungsmittel werden zusammen mit der Monomerenmischung mit dem auf die Polymerisationstemperatur erhitzten pulverförmigen Polymerisat in Kontakt gebracht. Die Monomeren (a) und (b) werden kontinuierlich oder chargenweise in das Pulverbett eingebracht, vorzugsweise in dem Maß, wie sie auch polymerisieren. Es ist besonders bevorzugt, die Monomeren kontinuierlich oder chargenweise in das Pulverbett einzubringen und die entstehenden Polymerisate kontinuierlich oder chargenweise in einer Menge, die dem Gewicht der zugeführten Menge an Monomeren in etwa entspricht, aus der Polymerisationszone auszutragen.

Die Polymerisation der Monomeren (a) und (b) erfolgt beispielsweise in mit Mischorganen ausgerüsteten Kesseln, Autoklaven, die gegebenenfalls als mehrstufige Kaskade ausgebildet sind, oder auch aus Kombinationen von Kesseln mit nachgeschalteten Strömungsrohren. Auf das in der Polymerisationsapparatur vorgelegte pulverförmige Material wird unter Polymerisationsbedingungen eine Lösung der Monomeren (a) und (b) vorzugsweise in dem jeweils zu verwendenden Wärmeübertragungsmittel auf das Pulverbett aufgesprüht. Das Wärmeübertragungsmittel kann jedoch auch separat von den Monomeren in die Polymerisationszone eingebracht werden. Während der Polymerisation wird für eine gute Durchmischung des Pulverbetts gesorgt. Da das Wärmeübertragungsmittel aus der Polymerisationszone entfernt wird, bleibt der Pulverzustand der Reaktionsmasse während der gesamten Dauer der Polymerisation aufrechterhalten. Sofern nur geringe Mengen eines Popcorn-Polymerisates gewünscht werden, wird die Reaktion beendet, sobald die gewünschte Menge hergestellt worden ist bzw. die Polymerisationsapparatur mit Polymerisat gefüllt ist. Man kann die Polymerisation jedoch auch kontinuierlich über mehrere Tage oder sogar Wochen fortführen, wenn man kontinuierlich bzw. chargenweise jeweils so viel Monomere zuführt wie man an Polymeren aus der Polymerisationszone ausschleust. Man erhält direkt unlösliche, nur wenig quellbare pulverförmige Polymerisate. Die Zusammensetzung der Monomeren kann kann während der Polymerisation im Festbett kontinuierlich oder auch abrupt geändert werden, ohne daß dadurch die Polymerisation gestoppt wird. So kann man beispielsweise als Komponente (a) N-Vinylformamid einsetzen und es durch eine Mischung aus 80 Gew.-% Acrylamid und 20 Gew.-% Acrylsäure ersetzen oder man beginnt die Polymerisation im Festbett mit Methacrylsäure als Monomer (a) und geht im Verlauf der Polymerisation plötzlich oder allmählich auf Acrylamid über. Nach Erreichen eines stationären Zustands im Reaktor erhält man dann Polymerisate, die bezüglich der Zusammensetzung derjenigen des Monomerengemisches entsprechen.

Die oben beschriebenen Popcorn-Polymerisate sind in allen Lösungsmitteln unlöslich und darin auch nur wenig quellbar. Sie können zwar bis zur 10 fachen Menge ihres Gewichts an Wasser aufnehmen, unterscheiden sich aber dennoch von als quellbar bezeichneten Polymerisaten dadurch, daß ihr Wasseraufnahmevermögen nur einen Bruchteil des Wasseraufnahmevermögens der bekannten in Gegenwart von Polymerisationsinitiatoren hergestellten gelförmigen Polymerisate beträgt. Der Teilchendurchmesser der unlöslichen, nur wenig quellbaren Polymerisate beträgt 0,05 bis 8, vorzugsweise 0,3 bis 4 mm. Die erfindungsgemäß hergestellten Popcorn-Polymerisate werden als Adsorbens, z. B. zur Adsorption von Gerbstoffen aus Getränken, als Formulierungshilfsmittel für Pflanzenschutzmittel und als Ionenaustauscher verwendet. Ein Einsatz als Ionenaustauscher kommt vor allem für diejenigen Polymerisate in Betracht, die carboxylgruppen-haltige Monomere einpolymerisiert enthalten, z. B. Popcorn-Polymerisate, zu deren Herstellung als Komponente (a) Acrylsäure oder Methacrylsäure als alleinige Komponente bzw. in Mischung mit anderen Bestandteilen, wie Acrylamid oder Methacrylamid eingesetzt wurden. Diejenigen Popcorn-Polymerisate, die von vornherein keine Carboxylgruppen enthalten, können durch Verseifung funktioneller Gruppen, z. B. von Estergruppen oder Amid-Gruppen, in Polymerisate überführt werden, die einen Ionenaustausch ermöglichen.

**Beispiele**

In sämtlichen Beispielen wurde als Polymerisationsapparatur ein 1-1-Kolben verwendet, der mit einem Magnetrührer und einem Ankerrührer, einem für das Arbeiten unter Stickstoffatmosphäre geeigneten Tropftrichter, einem Rückflußkühler und einer Stickstoffzuleitung versehen war. Der Kolben wurde in ein beheizbares Ölbad eingetaucht. Man leitete während der Polymerisation etwa 10 l Stickstoff/Stunde durch die Apparatur. Sobald in dem Kolben ein aktives Popcorn-Polymerisat vorlag, wurde der Rückflußkühler gegen einen Destillationskühler mit Vorlage ausgetauscht, so daß das bei der Festbettpolymerisation verwendete Wärmeübertragungsmittel während der Polymerisation aus der Polymerisationszone abdestilliert werden konnte.

**Beispiel 1**

In der oben beschriebenen Apparatur wurden 5 g N-Vinylpyrrolidon und 0,04 g Divinylethylenharnstoff vorgelegt und im Stickstoffstrom (Ausschluß von Sauerstoff) und unter Rühren auf eine Temperatur von 130°C erwärmt. Ach ca. 20 Minuten bildete sich rasch ein weißes Popcorn-Polymerisat. Die Polymerisation im Pulverbett erfolgte, indem man auf das so hergestellte trockene pulverförmige Popcorn-Polymerisat bei 130°C und unter Umwälzung der Reaktionsmasse innerhalb von 90 Minuten 95 g N-Vinyl-N-Methylacetamid, 5 g Acrylamid, 1 g Divinylethylenharnstoff und 5 ml Wasser zutropfte. Die Polymerisation begann ohne erkennbare Induktionsperiode. Während der Polymerisation wurde das als Wärmeübertragungsmittel verwendete Wasser kontinuierlich aus dem Kolben abdestilliert. Nach Beendigung der Monomerenzugabe wurde noch 30 Minuten bei einer Temperatur von 130°C nachpolymerisiert. Das so erhaltene Popcorn-Polymerisat wurde nach dem Waschen mit Aceton und Wasser bei 70°C im Vakuum getrocknet. Die Ausbeute betrug 99 g an pulverförmigem Polymerisat mit einem mittleren Durchmesser von ca. 2 mm.

**Beispiel 2**

In der oben beschriebenen Apparatur wurden 5 g des gemäß Beispiel 1 hergestellten unlöslichen, nur wenig quellbaren Polymerisates vorgelegt, das weder gewaschen noch getrocknet worden war. Das Polymerisat wurde gerührt und unter Stickstoffatmosphäre eine Stunde lang auf eine Temperatur von 120°C erhitzt. Die Polymerisation im Pulverbett erfolgte dadurch, daß man auf dieses Polymerisat unter Rühren innerhalb von 75 Minuten eine Mischung aus 75 g Acrylsäure, 25 g Acrylamid, 1,5 g Divinylethylenharnstoff und 25 ml Wasser zutropfte und das als Wärmeübertragungsmittel verwendete Wasser aus dem Kolben abdestillierte. Die Polymerisation setzte ohne eine erkennbare Induktionsperiode ein. Nach dem die Monomeren zugegeben worden waren, wurde das pulverförmige Gemisch noch 30 Minuten bei einer Temperatur von 120°C nachpolymerisiert, danach abgekühlt, 3 mal mit Wasser gewaschen und anschließend bei 70°C im Vakuum getrocknet. Man erhielt 97 g eines pulverförmigen, unlöslichen und nur wenig quellbaren Polymerisates.

**Beispiele 3 bis 12**

Man polymerisierte zunächst jeweils unter Ausschluß von Sauerstoff in einem Stickstoffstrom 15 g N-Vinylpyrrolidon und 0,12 g Divinylethylenharnstoff, in dem man diese Mischung unter ständigem Rühren auf eine Temperatur von 110°C erhitzte. Bei dieser Temperatur setzte nach ca. 15 Minuten die Bildung eines weißen, lockeren Polymerisates ein. Die Polymerisation war dann innerhalb von 5 Minuten beendet. Dieses Polymerisat diente als Vorlage für die Polymerisation im Pulverbett, die dann unter Umwälzung der Reaktionsmasse und abdestillieren des Lösemittels aus der Reaktionsmischung innerhalb von 90 bis 120 Minuten durchgeführt wurde. Die jeweils bei der Polymerisation im Pulverbett verwendeten Monomeren und Wärmeübertragungsmittel sind in der Tabelle 1 angegeben. Nach Zugabe der Monomeren wurde das Reaktionsgemisch noch eine Stunde unter Beibehaltung der jeweiligen Temperatur, bei der die Polymerisation erfolgte nachpolymerisiert. Anschließend wurden die Popcorn-Polymerisate zweimal mit Aceton gewaschen und bei 70°C im Vakuum getrocknet. Die Polymerisationstemperaturen und die Ausbeuten sind ebenfalls in Tabelle 1 angegeben.

**Tabelle 1**

| Beispiel-Nr. | Zulauf | Polymerisations-Temperatur [°C] | Ausbeute [g] |
|---|---|---|---|
| 3 | 100 g Methylacrylat und 2 g Butandioldiacrylat gelöst in 25 ml Essigsäureethylester | 110 | 101 |
| 4 | 100 g Ethylacrylat und 4 g Divinylethylenharnstoff gelöst in 50 ml n-Propanol | 110 | 105 |
| 5 | 100 g Butylacrylat und 1 g Ethyliden-bis-3-(vinylpyrrolidon) gelöst in 25 ml n-Propanol | 110 | 106 |
| 6 | 100 g 2-Hydroxyethylacrylat und 1,2 g Divinylethylenharnstoff 40 ml n-Propanol | 130 | 100 |
| 7 | 100 g Hydroxypropylacrylat (Isomerengemisch aus 2- und 3-Hydroxypropylacrylat) und 2 g Butandioldiacrylat gelöst in | 130 | 78 |

| | | | | |
|---|---|---|---|---|
| | | Essigsäurepropylester | | |
| 8 | 100 g | Methylmethacrylat und 2 g Butandioldiacrylat gelöst in 25 ml Essigsäurepropylester | 140 | 72 |
| 9 | 100 g | Methylacrylat und 2 g Butandioldiacrylat gelöst in 30 ml n-Heptan | 140 | 74 |
| 10 | 100 g | Methylmethacrylat und 1,5 g Divinylethylenharnstoff gelöst in 25 ml Methylcyclohexan | 140 | 83 |
| 11 | 100 g | Methylmethacrylat und 1,5 g Divinylethylenharnstoff gelöst in 25 ml Toluol | 140 | 98 |
| 12 | 30 g | Methylmethacrylat, 70 g Hydroxypropylacrylat, 1,5 g Butandioldiacrylat gelöst in 30 ml 4-Methyl-2-pentanon | 140 | 97 |

**Anwendungstechnisches Beispiel**

Für das oben beschriebenen Polymerisat, das nach Beispiel 6 anfiel, wurde die Tannin-Adsorption geprüft. Die Prüfung erfolgte dabei so, daß man zu 100 mg des Polymerisats 100 ml einer 0,1 gew.-%-igen wäßrigen Tannin-Lösung zugab und die Mischung 10 bzw. 40 Minuten lang schüttelte. Nach den angegebenen Zeiten wurde jeweils das Polymerisat abfiltriert, das Filtrat mit Wasser auf 1/5 der ursprünglichen Konzentration verdünnt und der Restgehalt an Tannin durch Vergleichen der Messung mit einer nicht-behandelten Lösung bei einer Wellenlänge von 275 nm in einem Spektralphotometer gemessen. Dabei wurden die aus der Tabelle 2 ersichtlichen Ergebnisse erhalten:

**Tabelle 2**

| Popcorn-Polymerisat erhalten nach Beispiel | Rest-Tanningehalt nach 10 Minuten | 40 Minuten |
|---|---|---|
| 6 | 48 % | 17 % |

**Patentansprüche**

1. Verfahren zur Herstellung von unlöslichen, nur wenig quellbaren, pulverförmigen Polymerisaten auf Basis von monoethylenisch ungesättigten Carbonsäureamiden, Carbonsäuren und Carbonsäureestern, dadurch gekennzeichnet, daß man zum Starten der Polymerisation ein aktives Popcorn-Polymerisat verwendet, das durch Erhitzen einer Mischung aus
99,6 bis 98,8 Gew.-% N-Vinylpyrrolidon-2 und
0,4 bis 1,2 Gew.-% einer mindestens zwei ethylenisch ungesättigte Doppelbindungen aufweisenden Verbindung als Vernetzer

auf eine Temperatur in dem Bereich von 100 bis 150°C in Abwesenheit von Sauerstoff und Polymerisationsinitiatoren erhältlich ist und dann darin Mischungen aus

(a) 99,9 bis 90 Gew.-% einer Verbindung der Formel

$R\text{-}CO\text{-}NR^1\text{-}CH = CH_2$

in der R = H, $C_1$- bis $C_3$-Alkyl und $R^1$ = H oder $CH_3$ bedeutet, Acrylamid, Methacrylamid, Acrylsäure, Methacrylsäure, Acrylsäureester, Methacrylsäureester und/oder einem Vinylester
und
(b) 0,1 bis 10 Gew.-%, bezogen auf die gesamten Monomeren, einer mindestens zwei ethylenisch ungesättigte, nicht konjugierte Doppelbindungen aufweisenden Verbindung als Vernetzer
in einem Pulverbett in Gegenwart eines Wärmeübertragungsmittels, das gegenüber den Reaktionsteilnehmern inert ist, bei Temperaturen von 90 bis 220°C unter Aufrechterhaltung des Pulverzustandes, Umwälzung der Reaktionsmasse und Verdampfen des Wärmeübertragungsmittels aus der Polymerisationszone unter Ausschluß von Sauerstoff und Polymerisationsinitiatoren polymerisiert.
2. Verfahren nach Anspruch 1, dadurch gekennzeichnet, daß man als Monomer der Komponente (a) N-Vinylformamid, N-Vinyl-N-methylacetamid, Acrylamid, Methacrylamid, Acrylsäure oder Methacrylsäure einsetzt.

3. Verfahren nach den Ansprüchen 1 und 2, dadurch gekennzeichnet, daß man als Komponente (a) Mischungen aus Acrylamid und Acrylsäure einsetzt.

4. Verfahren nach den Ansprüchen 1 und 2, dadurch gekennzeichnet, daß man als Komponente (a) Mischungen aus Methacrylsäure und Acrylsäure einsetzt.

5. Verfahren nach den Ansprüchen 1 und 2, dadurch gekennzeichnet, daß man als Komponente (a) Mischungen aus Acrylamid und Methacrylamid einsetzt.

6. Verwendung der nach den Ansprüchen 1 bis 5 herstellbaren unlöslichen, nur wenig quellbaren Polymerisate als Adsorbens, Formulierungshilfsmittel für Pflanzenschutzmittel oder Ionenaustauscher.

## Claims

1. A process for the preparation of an insoluble polymer powder which is only slightly swellable and is based on monoethylenically unsaturated carboxamides, carboxylic acids and carboxylates, wherein, in order to initiate the polymerisation, an active popcorn polymer is used which is obtainable by heating a mixture of from

99.6 to 98.8 % by weight of N-vinylpyrrolid-2-one and

from 0.4 to 1.2 % by weight of, as a crosslinking agent, a compound which possesses two or more ethylenically unsaturated double bonds to in the absence of oxygen and any polymerization initiator, and then a mixture of

(a) from 99.9 to 90% by weight of a compound of the formula

$$R\text{-}CO\text{-}NR^1\text{-}CH = CH_2$$

in which R is H or $C_1$-$C_3$-alkyl and $R^1$ is H or $CH_3$, acrylamide, methacrylamide, acrylic acid, methacrylic acid, acrylates, methacrylates and/or a vinyl ester,

and

(b) from 0.1 to 10 % by weight, based on the total amount of monomers, of, as a crosslinking agent, a compound which possesses two or more ethylenically unsaturated, non-conjugated double bonds

is polymerized in the absence of oxygen and any polymerization initiator in a powder bed in the presence of a heat-transfer medium which is inert to the reactants, at from 90 to 220°C, the powder state being maintained, the reaction mass being circulated and the heat-transfer medium being evaporated from the polymerization zone.

2. A process as claimed in claim 1, wherein N-vinylformamide, N-vinyl-N-methylacetamide, acrylamide, methacrylamide, acrylic acid or methacrylic acid is used as the monomer of component (a).

3. A process as claimed in either of claims 1 and 2, wherein a mixture of acrylamide and acrylic acid is used as component (a).

4. A process as claimed in either claims 1 and 2, wherein a mixture of methacrylic acid and acrylic acid is used as component (a).

5. A process as claimed in either claims 1 and 2, wherein a mixture of acrylamide and methacrylamide is used as component (a).

6. Use of an insoluble polymer which is only slightly swellable and is preparable as claimed in any of claims 1 to 5 as an adsorbent, a formulation assistant for crop protection agents or as an ion exchanger.

## Revendications

1. Procédé de préparation de polymères en poudre insolubles ne gonflant que peu, base de carboxamides, d'acides carboxyliques et d'esters d'acides carboxyliques à insaturation monoéthylénique, caractérisé en ce que, pour démarrer la polymérisation, on utilise un polymère de type "pop-corn" actif qui est prépare par chauffage d'un mélange de

99,6 à 98,8 % en poids de N-vinyl-pyrrolidone-2 et

0,4 à 1,2 % en poids d'au moins un composé présentant deux doubles liaisons insaturées éthyléniques en tant qu'agent de réticulation

à une température comprise entre 100 et 150°C en l'absence d'oxygène et d'amorceurs de polymérisation, puis on polymérise des mélanges de

a) 99,9 à 90 % en poids d'un composé de formule

$$R\text{-}CO\text{-}NR^1\text{-}CH = CH_2$$

dans laquelle R est H ou un groupement alkyle en $C_1$-$C_3$ et $R^1$ est H ou $CH_3$, d'acrylamide, de méthacrylamide, d'acide acrylique, d'acide méthacrylique, d'ester d'acide acrylique, d'ester d'acide méthacrylique et/ou d'un ester vinylique,

et

b) 0,1 à 10 % en poids, par rapport aux monomères totaux, d'un composé comportant au moins deux doubles liaisons insaturées éthyléniques non conjuguées, en tant qu'agent de réticulation dans un lit pulvérulent en présence d'un milieu de transmission de la chaleur, qui est inerte vis-à-vis des corps participant à la réaction, à des températures de 90 à 220°C avec maintien de l'état pulvérulent, circulation de la masse réactionnelle et évacuation du milieu de transmission de chaleur par évaporation hors de la zone réactionnelle, en l'absence d'oxygène et d'amorceurs de polymérisation.

2. Procédé selon la revendication 1, caractérisé en ce qu'on utilise comme monomère du composant (a) du N-vinylformamide, du N-vinyl-N-méthyl-acétamide, de l'acrylamide, du méthacrylamide, de l'acide acrylique ou de l'acide méthacrylique.

3. Procédé selon la revendication 1 ou 2, caractérisé en ce qu'on utilise comme composant (a) des mélanges d'acrylamide et d'acide acrylique.

4. Procédé selon la revendication 1 ou 2, caractérisé en ce qu'on utilise comme composant (a) des mélanges d'acides méthacrylique et acrylique.

5. Procédé selon les revendications 1 et 2, caractérisé en ce qu'on utilise comme composant (a) des mélanges d'acrylamide et de méthacrylamide.

6. Utilisation des polymères insolubles, ne gonflant que peu, préparés selon les revendications 1 à 5, comme adsorbants, produits auxiliaires de formulation pour produits phytoprotecteurs ou échangeurs d'ions.